# EUROPEAN PATENT APPLICATION

(11) **EP 4 597 798 A1**
(43) Date of publication of application: **06.08.2025**
(21) Application number: 24155562.2
(22) Date of filing: 02.02.2024
(51) Int. Cl.: H02K 1/32, H02K 3/24, H02K 3/52, H02K 9/19, H02K 1/24

(54) **A SUPPORT ARRANGEMENT**

(71) Applicant: Polestar Performance AB, 405 31 Gothenburg (SE)
(72) Inventor: EHN, Joakim, 461 98 Trollhättan (SE); HÅKANSSON, Emil, 416 74 Göteborg (SE)
(74) Representative: Zacco Sweden AB

(57) **Abstract**

The present disclosure relates to a support arrangement (1) for a rotor (100), the support arrangement (1) comprising a channel structure (10) extending from an annular disc portion (4) of the support arrangement (1) to an outer periphery portion (3a) of each arm (3) of the support arrangement (1). Furthermore, the channel structure (10) is arranged to receive cooling medium via a rotor shaft (130) or said rotor core (101) of said rotor (100) so to eject said cooling medium from a periphery portion (3a) of each arm (3).

## Description

### TECHNICAL FIELD

The present disclosure relates to a support arrangement for a rotor, a rotor comprising such a support arrangement and an electric motor comprising such a support arrangement.

### BACKGROUND

In an electric vehicle (EV) the rotor and stator are key components of the electric motor that drives the vehicle's wheels. The rotor is the rotating part of the motor, typically made of a series of electromagnets, which are energized by electrical current. As the rotor spins, it generates a magnetic field that interacts with the stator. The stator is the stationary part of the motor, typically consisting of windings wound around a core. The rotor and stator work together to convert electrical energy stored in the EV's battery into mechanical energy to drive the vehicle, making them critical components of the EV powertrain.

Permanent magnets used in rotors are not considered environmentally friendly for several reasons. First, the production of permanent magnets involves mining and refining of rare earth elements, which can cause environmental degradation and pollution. Also, permanent magnets can pose challenges in recycling and disposal, as they contain hazardous materials that can potentially harm the environment if not handled properly. Therefore, while permanent magnets have many technological benefits, their production and use can have negative environmental implications that need to be carefully managed.

Based on the above, electrically excited rotors using windings around the rotor core are considered to be more environmental friendly compared to permanent magnet rotors.

However, the rotor will during operation be heated, e.g. due to resistive losses in its winding caused by the flow of electric current. Accordingly, to prevent overheating, cooling means are needed to dissipate the heat and maintain an adequate operating temperature for the rotor.

Electrically excited rotors of the present art comprise cooling means which are too bulky and/or inefficient.

Therefore, there is room for an arrangement for a rotor that enables the rotor to be cooled more efficiently and/or that enables the rotor to be cooled without increasing the bulkiness of the rotor.

### SUMMARY

It is therefore an object of the present disclosure to alleviate at least some of the mentioned drawbacks to provide a support arrangement that is compact and/or improves the cooling of the rotor. The present disclosure is at least partly based on the insight that, by providing a support arrangement having a channel structure therein which is arranged to receive cooling medium, the rotor will be cooled efficiently and/or the rotor will have a cooling functionality without any increase in bulkiness.

The present disclosure discloses a support arrangement for a rotor, the support arrangement having an inner surface and an opposite outer surface, the inner surface being arranged to be attached to a first base portion/end portion which is directed towards/adjacent an annular rotor core of said rotor. The outer surface being arranged to face an end-plate of said rotor. Further, the support arrangement comprises an annular disc portion arranged to be coaxially arranged (i.e. aligned) with respect to said rotor core. In other words, it may be arranged such that it encircles a rotor shaft.

Further, the support arrangement comprises a plurality of radially extending arms extending from said annular disc portion, each arm being arranged to extend along a pole base of a corresponding pole of said rotor, each arm being arranged to receive a winding overhang portion (which may also be referred to as a winding end-turn) of a winding arrangement of said rotor. In other words, each arm may be arranged to extend radially along a corresponding pole. Each arm may comprise an arm head which is arranged to prevent winding overhangs from being displaced radially. Furthermore, the support arrangement comprises a channel structure extending from said annular disc portion (along at least one arm) to an outer periphery portion of said arm, preferably the support arrangement comprises a channel structure extending from said annular disc portion along each arm to an outer periphery portion of at least one of said arms, preferably each arm. The channel structure may then be arranged to receive cooling medium via a rotor shaft or said rotor core of said rotor so to eject said cooling medium from said periphery portion of each arm.

Advantageously, as the channel structure extends from the annular disc portion to the outer periphery portion of each arm, the cooling medium can be circulated close/adjacent to the winding overhang portions which typically is the part of the winding arrangement that experience the greatest temperature increase when current is flowing through the winding arrangement. Therefore, an efficient cooling of the winding arrangement is provided. Additionally, the support arrangement increases the cooling surfaces and heat flux between the rotor winding and the cooling medium (which can be e.g. oil or any other suitable cooling medium).

The term "support arrangement" may be interchanged with "winding support arrangement" or "support device".

The support arrangement may be formed by a metal structure which is coated with an electric insulating/non-conductive material. Preferably, the support arrangement may be formed by aluminium or any other suitable metal, it may be formed by a composition of different metals and/or composition of different materials. The support arrangement may be arranged to be rigid to support the rotor winding.. The support arrangement may be formed by a nonconductive material such as polymer or ceramic or other material, e.g., glass fiber.

The channel structure may form, along the arm, a meandering/sinuous/twisting/zigzag path. Preferably, the path has a small diameter which may improve the distribution of cooling medium. For example, a channel having a too big size of diameter/width may distribute the cooling medium only partially along the channel which may not optimize the cooling effect. The path may include further arrangements for evenly distributing cooling medium passing through. Advantageously, this can further increase the cooling efficiency of each arm so that the cooling medium utilizes as large of a surface of each arm as possible. The channel structure may allow the cooling medium to pass the channel with a flow rate that optimizes the cooling effect.

Further, the channel structure may be defined by an indentation/recess (preferably having a half-circular cross-section i.e. an open top) formed in said inner surface of said support arrangement, wherein surrounding parts (surrounding region) of said indentation/channel structure is arranged to (preferably) hermetically abut/connect to said base portion.

An advantage of this is that the cooling medium will exclusively/solely be transported in said channel structure without leaking into other parts of the inner surface. By having the channel structure as an indentation in the inner surface, the support arrangement is more compact and will be able to be manufactured in a more convenient manner.

In some aspects of the present disclosure, the channel structure may be between the inner surface and the outer surface of said support arrangement such that it is embedded within the support arrangement. The support arrangement may comprise different channel structures.

Further, the channel structure may comprise an annular/circular portion (preferably forming a full circular indentation/channel/continuous annular passage) at said inner surface of said support arrangement. The annular portion (which may be referred to as an annular channel portion) is arranged to extend along the annular disc portion (i.e. arranged to encircle the rotor shaft). The channel structure may comprise a plurality of channel branches distributed so that one channel branch extends along each arm, each channel branch extending from said annular portion, the annular portion being arranged to receive cooling medium via said rotor shaft or said rotor core. Hence, the annular portion may be in fluid communication with a portion of the shaft or core that outputs/ejects cooling medium so that the annular portion receives said cooling medium and distributes the cooling medium along (the rest of the channel structure) each arm out from said periphery portion of each arm.

Accordingly, if the annular portion receives cooling medium from said rotor shaft, the annular portion is arranged at an inner periphery of said annular disc portion.

The advantage of having an annular portion which distributes cooling medium to each channel branch is that it enables the cooling medium to flow with higher velocity along the channel branches and also balances the distribution of fluid. Thereby, more efficient cooling can be obtained.

Moreover, the support arrangement may comprise a plurality of fins within said channel structure. The fins may be protruding rods for enabling better cooling. The channel structure may comprise various blocking arrangements, e.g. protrusions extending from the path wall towards the channel cavity, to improve the distribution and contact of the cooling medium when it passes along the channel.

The present disclosure further discloses a rotor, preferably an electrically excited rotor. The rotor comprising an annular rotor core having a first and an opposite second base portion (i.e. a distance between base portions may define a depth of the core). The rotor core further comprising a plurality of radially projecting poles evenly distributed around an outer circumference of said rotor core, each pole extending between said first and second base portion. Each pole may comprise a pole base and a pole hat projecting radially from said pole base. Each pole may extend substantially along the depth of the rotor core. Further, each pole may be formed by a pole lamination structure. The rotor further comprises a rotor shaft accommodated by said annular rotor core. The rotor further comprises a winding arrangement wound axially around each pole. Further, the rotor comprises the support arrangement according to any aspect herein. The support arrangement is attached to said first base portion. Furthermore, the rotor comprises an end-plate enclosing said first base portion, wherein the support arrangement is intermediate the first base portion and said end-plate. In other words, the support arrangement is axially intermediate the first base portion and said end-plate. The end-plate may be arranged to enclose the winding overhang to isolate the winding overhang from surroundings of the rotor i.e. the winding overhang is sandwiched between the end-plate and the support arrangement. The end-plate may comprise a potting/filling material to electrically insulate the winding overhang. The end-plate may be formed by a metal, the metal may be coated with an electric insulating material.

The rotor having the support arrangement as described in the aforementioned provides at least the same advantages as described in view of the support arrangement. Therefore, to avoid undue repetition reference is made to the aforementioned advantages of the support arrangement.

The end-plate may form an interference-fit relationship (i.e. press-fitted) with said support arrangement and/or said rotor core, preferably the end-plate and said support arrangement jointly form a keyed connection. In other words, one of the end-plate and the support arrangement may comprise a protrusion and the other one may comprise a cavity arranged to mate with the protrusion to rotationally lock the support arrangement relative to the end-plate.

An advantage of this is that the end-plate can be conveniently attached to the support arrangement. The interference fit relationship may be accompanied by fixing means (such as screws, bolts or adhesive).

Further, an inner surface of said end-plate and said outer surface of said support arrangement are arranged to jointly secure said winding overhang portions of said winding arrangement therebetween. In some aspects, the winding overhang portions may be compressed, directly or indirectly by said support arrangement and said end-plate.

Further, the end-plate may comprise a plurality of ejection channels for outputting cooling medium away from said rotor. Each ejection channel being in fluid communication with the channel structure at a corresponding periphery portion of each arm (i.e. at a radial end of each channel branch), wherein each ejection channel is arranged to eject cooling medium away from said rotor, preferably from a circumferential surface of said end-plate. In other words, the channel structure may direct cooling medium received from the rotor core or rotor shaft radially and eject said cooling medium away from said rotor from a circumferential (outer) surface of said end-plate. The cooling medium may be received via a plurality of radial openings in said rotor shaft or rotor core. Each radial opening may be in fluid communication with said annular portion.

Each ejection channel may be arranged to eject said cooling medium towards an end-winding of a stator being arranged to accommodate said rotor. Thereby, the cooling medium can cool both the end windings of the rotor and the end windings of the stator.

Furthermore, each ejection channel is arranged to eject said cooling medium towards said end-winding by being angled relative an axial axis of said rotor, preferably by 25-65 degrees or 25-85 degrees.

In some aspects, the rotor may comprise a pair of support arrangements according to the support arrangement of any aspect herein. An additional support arrangement of said pair is attached to said second base portion. Accordingly, the rotor may further also comprise an additional end-plate enclosing said second base portion, wherein the additional support arrangement is intermediate the second base portion and said additional end-plate. The rotor shaft or said rotor core may be arranged to distribute cooling medium to the support arrangement and the additional support arrangement. The rotor shaft or said rotor core may further comprise a distribution means (e.g. a nozzle) for distribute the cooling medium, said distribution means is dimensioned/arranged relative the shaft or rotor core to direct the cooling medium in two opposite directions. If the cooling medium is distributed from said rotor shaft, it may be distributed via a centre interior portion thereof. Hence, a nozzle may inject cooling medium within said rotor shaft, the rotor shaft may, at said interior, be dimensioned to split the cooling medium into opposite paths for providing the support arrangement and the additional support arrangement with said cooling medium which may be received via an annular portion of a channel structure of said support arrangement.

Advantageously, a pair of support arrangements may efficiently be provided with cooling medium thereby enabling cooling of the winding overhang on both sides of the rotor.

The cooling medium may be provided by a cooling device which has a reservoir for storing said cooling medium, a pump for circulating said cooling medium and any other suitable means as appreciated by a skilled person in the art.

The present disclosure further discloses an electric motor comprising a stator and a rotor according to any aspect herein. The rotor being accommodated by said stator. The stator may comprise a stator core and stator windings distributed about said core. The stator windings may be distributed at an inner circumferential portion of said stator core. Accordingly, the winding arrangement of the rotor may be arranged to obtain DC power to generate a magnetic field which is arranged to interact with the alternating magnetic field of the stator (which is arranged to receive AC power).

In some aspects, the present disclosure may also comprise an electric vehicle comprising the aforementioned electric motor.

### BRIEF DESCRIPTION OF THE DRAWINGS

These and other features and advantages of the present disclosure will now be further clarified and described in more detail, with reference to the appended drawings;
- Figure 1: illustrates an objective view of a support arrangement in accordance with some aspects of the present disclosure;
- Figure 2: illustrates a side cross-sectional view of a rotor comprising a support arrangement in accordance with some aspects of the present disclosure;
- Figure 3: illustrates an exploded view of a rotor and a support arrangement in accordance with some aspects of the present disclosure;
- Figure 4: illustrates a front cross-sectional view of a rotor in accordance with some aspects of the present disclosure;
- Figure 5: illustrates an objective view of a rotor with a front cross-sectional representation; and
- Figure 6: illustrates a cut-out side cross-sectional view of an electric motor comprising a rotor and a stator.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "winding overhang" may refer to end-turns of a winding of a rotor and/or to portions of the winding extending beyond the depth of the rotor core axially.

The term "rotor" herein may refer to an electrically excited rotor having windings being magnetized by an external electrical source. Accordingly, the windings may receive direct current (DC) to simulate a permanent magnetic field.

The term "radially" may refer to a direction perpendicularly outward from a central point or axial axis, specifically a central axis of a circular structure. For instance, if a line is drawn from a center of a circle to its circumference or from its circumference outwards, those lines may be considered as extending radially.

The term "axially" may refer to a direction along or parallel to an axial axis or central line. Specifically, parallel to or along a central line or axis of a circular structure.

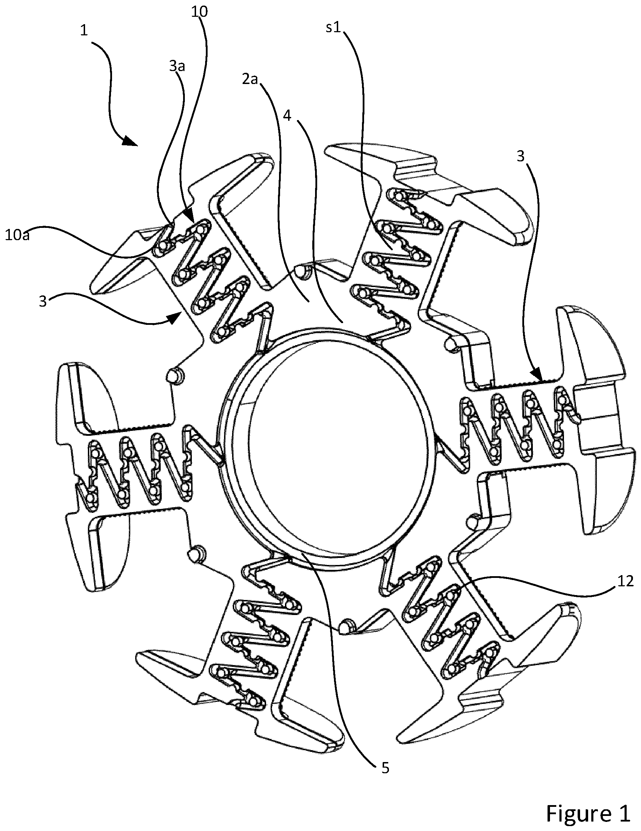

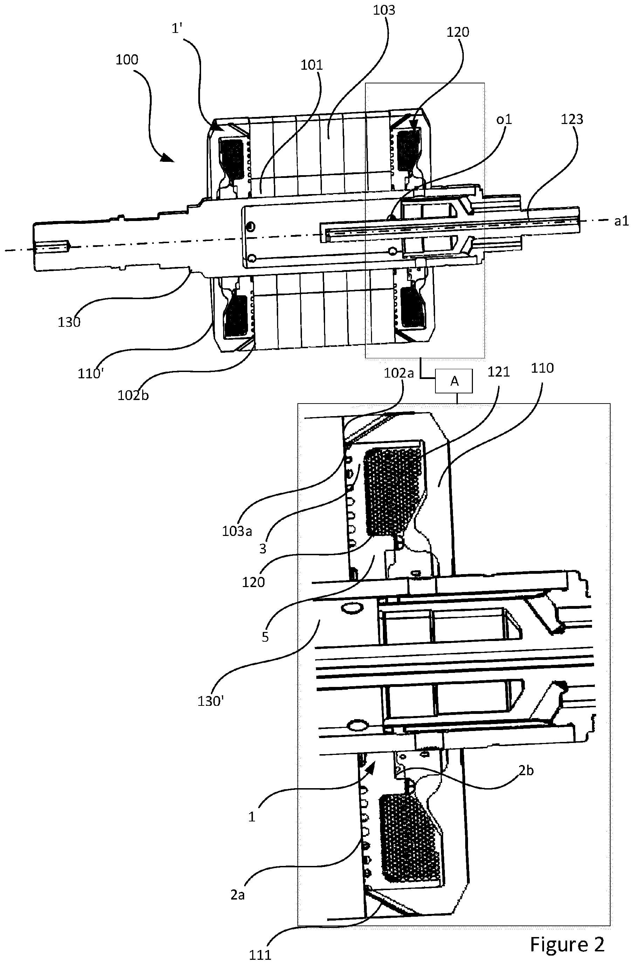

Figure 1 illustrates an objective view of a support arrangement 1 in accordance with some aspects of the present disclosure. The support arrangement 1 comprising an inner surface 2a and an opposite outer surface 2b (which is not seen in Figure 1). The inner surface 2a being arranged to be attached to a first base portion 102a of an annular rotor core 101 (rotor and components thereof is not shown in Figure 1, see Figure 2) of said rotor 100 the outer surface 2b being arranged to face an end-plate 110 of said rotor. The inner surface 2a may be a completely flat surface (if the channel structure 10 is excluded) or at least 70-95% of the inner surface 2a may be flat. The support arrangement 1 comprises an annular disc portion 4 arranged to be coaxially arranged with respect to said rotor core 101. The annular disc portion 4 may, as illustrated in Figure 1, comprise an opening dimensioned to encircle a rotor shaft. The annular disc portion 4 may form a donut/disc shape or the like, having a thickness, an inner circumference (that is arranged to connect to a rotor shaft) and an outer circumference which the radially extending arms 3 may extend from. Therefore, as illustrated, the annular disc portion 4 comprises a plurality of evenly distributed radially extending arms 3 extending from said annular disc portion 4. Each arm 3 is arranged to extend radially along a pole base 103a (i.e. radially extending pole base surface) of a corresponding pole 103 of said rotor 100, each arm 3 being arranged to receive a winding overhang portion 121 of a winding arrangement 120 said rotor 100. Figure 1 illustrates that the support arrangement 1 further comprises a channel structure 10, the channel structure 10 extending from said annular disc portion 4 to an outer/distal periphery portion 3a of each arm 3. Accordingly, as illustrated in Figure 1, the channel structure 10 is dimensioned to enable cooling medium to be ejected away from said outer periphery portion 3a. In other words, channel structure 10 is arranged to receive cooling medium via a rotor shaft 130 or said rotor core 101 of said rotor 100 so to eject said cooling medium from said periphery portion 3a of each arm 3.

Figure 1 further illustrates that the channel structure 10 forms, along each arm 3 a meandering path. In other words, a zigzag path may be formed by the channel structure 10 along each arm 3. The zigzag path may across a width corresponding to 70-99% of the width of each arm 3.

Figure 1 further illustrates that the channel structure 10 may be defined by an indentation formed in said inner surface 2a of said support arrangement 1. Surrounding parts s1 of said indentation may be arranged to hermetically abut said base portion 102a. Accordingly, in an installed state of said support arrangement 1, the surrounding parts s1 and the base portion 102a jointly seal the channel structure 10 such that cooling medium is enabled to be transferred along the channel structure 10 without any leakage to said surrounding parts s1. Thereby, the cooling medium can be transferred radially along said channel structure 10 from an innermost radial part thereof to an outermost radial part thereof (i.e. the periphery portion 3a). It should be noted that the base portion 102a may comprise indentations corresponding to the channel structure of the support arrangement which align with the channel structure 10 upon mating the support arrangement 1 with the rotor core 101.

Figure 1 further illustrates that the support arrangement 1 comprises a plurality of fins 12 within said channel structure 10. For example, the channel structure 10 may comprise 10-50 fins.

Figure 1 further illustrates that the channel structure 10 may comprise an annular portion 5 that may form a continuous annular indentation/passage for receiving cooling medium from the rotor shaft or the rotor core. The annular portion 5 being arranged to distribute said cooling medium to the rest of the channel structure 10 i.e. along each arm.

Figure 2 illustrates a cross sectional side view of a rotor 100 comprising the support arrangement 1 according to any aspect herein. Figure 2 illustrates an enlarged view A that emphasizes the support arrangement 1, an end-plate 110 and a first base 103a of the rotor 100.

Accordingly, Figure 2 illustrates that the support arrangement is attached to the first base portion 102a of the annular rotor core 101. Further, Figure 2 illustrates that the outer surface 2b of the support arrangement 1 is directed towards an end-plate 110 of said rotor. Further, Figure 2 illustrates that each arm 3 extends along a pole 103 of said rotor. In the enlarged view A, only two opposite arms 3 are shown. Hence, only two poles 103 are shown also.

Figure 2 further illustrates that the annular disc portion 4 of the support arrangement 1 encircles the rotor shaft 130 such that it is in contact with said rotor shaft 130. Hence, the support arrangement 1 and the rotor core 101 are coaxial so that the axial axis a1 is a common central axis for the rotor core 101 and the support arrangement 1. Moreover, Figure 2 illustrates winding overhang portions 121 that are sandwiched between the end-plate 110 a second surface 2b of a corresponding arm 3. The space in-between the end-plate 110 and each arm 3 may be accompanied with a potting material to compress the winding overhang portions 121. Accordingly, each arm 3 may at said second surface 2b be dimensioned to receive a corresponding overhang portion 121. Accordingly, each arm 3 may form a winding receiving pocket/cavity. The winding receiving pocket/cavity may have tracks.

Figure 2 further illustrates that wherein the rotor 100 may comprise a pair of support arrangements 1, 1'. The support arrangement 1 attached to the first base portion 102a may be referred to as a first support arrangement 1 and the support arrangement 1' attached to the second base portion 102b may be referred to as a second support arrangement 1' . Accordingly, the rotor 100 may also comprise an additional/second end-plate 110' enclosing said second base portion 102b. Accordingly, the end-plate 110 may be referred to as a first end-plate 110. Figure 2 illustrates that the additional/second support arrangement 1' is intermediate the second base portion 102b and said additional end-plate 110'. Accordingly, the rotor shaft 130 is arranged to distribute cooling medium, via a centre interior portion thereof 130' to the support arrangement (1) and the additional support arrangement 1'. However, it should be noted that the cooling medium may in some aspects be distributed from the rotor core 101. As further illustrated in Figure 2, a nozzle 123 may be inserted into the rotor shaft 130 and extend into the interior portion 130' thereof. The nozzle 123 may input cooling medium into the rotor shaft 130. Accordingly, the rotor shaft 130 may have radial openings o1 fluidically connected to the annular portion 5 of the support arrangement 1 such that cooling medium can flow through the nozzle 123, into the rotor shaft 130 and through the radial openings o1 into the channel structure 10 (via its annular portion 5) and out from the channel structure 10 from a periphery portion 3a therein at a distal/radial end of each channel branch 10a.

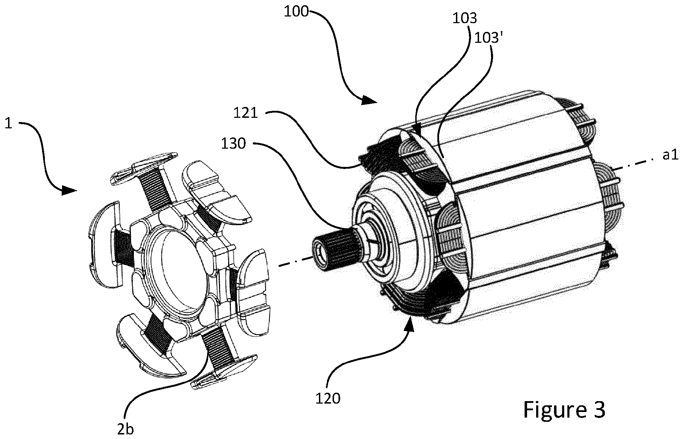

Figure 3 illustrates an exploded objective view of a rotor 100 and a support arrangement 1. The rotor 100 of Figure 3 is an electrically excited rotor 100 having a winding arrangement 120. In Figure 3 only the winding overhang portions 121 of the winding arrangement 120 are visible. Accordingly, it is illustrated in Figure 3 that each pole 103 comprise a part of the winding arrangement 120 axially wound there around. The configuration of the winding arrangement 120 may be varied within the context of the present disclosure, hence the winding arrangement 120 may comprise a plurality of interconnected windings or a common winding structure. Further, the type of conductors used may also be varied, hence the conductors of the winding arrangement may be e.g. hairpin conductors or any other suitable type of conductors. The winding arrangement 120 may be arranged to receive direct current (DC) power to simulate a permanent magnetic field. The outer surface 2b of the support arrangement 1 is arranged to support winding overhang portions 121.

Figure 3 further illustrates that each pole 103 comprises a pole hat 103' at an end thereof. The number of poles 103 may be varied within the context of the present disclosure. In Figure 3, the rotor 100 comprises 6 poles. Hence, the support arrangement 1 comprises six arms 3.

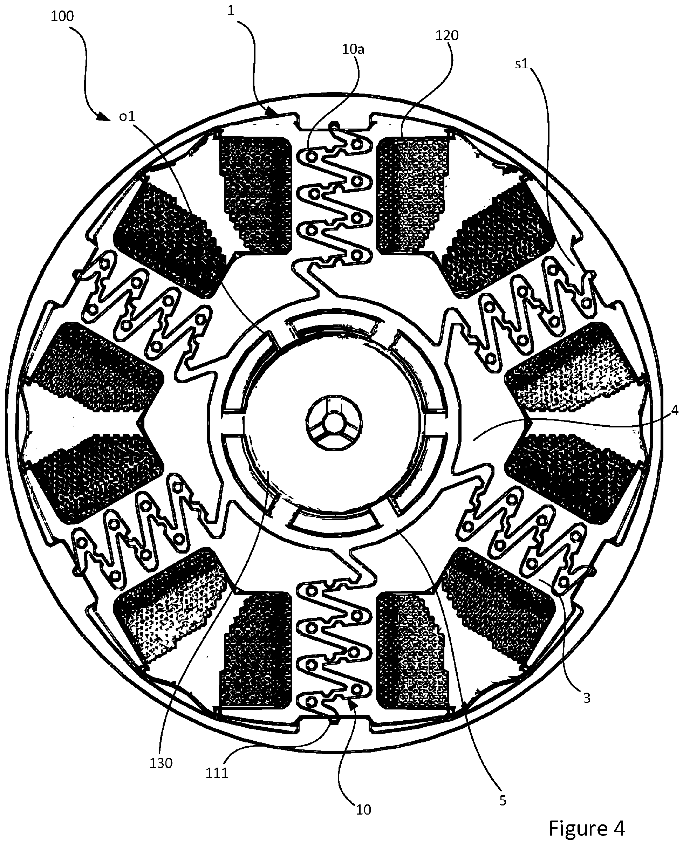

Figure 4 illustrates a front cross-sectional view of a rotor 100 in accordance with aspects herein. Figure 4 illustrates that the annular portion 5 may form a continuous circle in fluid communication with radial openings o1 of the rotor shaft 130. The radial openings o1 may be distributed evenly about the circumference of the rotor shaft 130. Figure 4 discloses that the annular portion 5 is located at an inner periphery of said annular disc portion 4 such that it defines a corner of the disc portion 4 which is between an inner circumference of the disc portion 4 (which is arranged to abut an outer circumference of the rotor shaft 130) and the inner surface 2a. However, the annular portion 5 may be arranged at another portion of the disc portion 4, for example, if the annular portion 5 receives cooling medium via said rotor core 101.

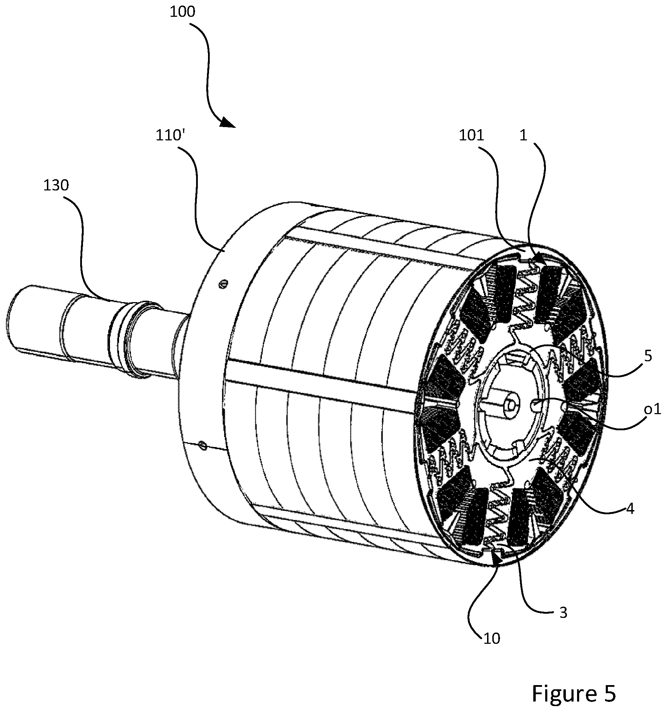

Figure 5 illustrates an objective view of a rotor 100 in which a circular cross-section is illustrated. Figure 5 illustrates the radial openings o1 of the shaft 130 in fluid communication with the annular portion 5 of the channel structure 10.

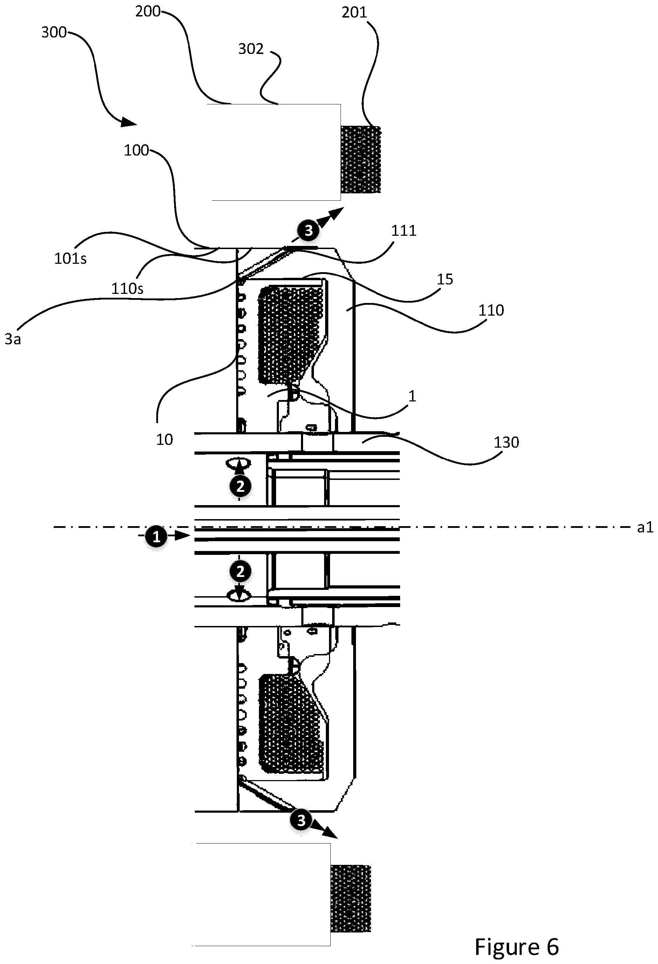

Figure 6 illustrates a cutout side cross-sectional view of an electric motor 300 in accordance with some aspects of the present disclosure. Figure 6 illustrates that the end-plate 110 may form an interference-fit relationship with said support arrangement 1. The end-plate 110 may as illustrated circumferentially enclose a top circumference surface 15 of the support arrangement 1 i.e. the end-plate 110 may be press-fitted to enclose the support arrangement 1, preferably, as illustrated in Figure 6, a circumferential outer surface 110s of the end-plate 110 is flush or substantially flush with the outer circumference 101s of the rotor core 101.

Figure 6 further illustrates that the end-plate 110 may comprises a plurality of ejection channels 111, each ejection channel 111 being in fluid communication with the channel arrangement 1 at a corresponding periphery portion 3a of each arm 3. In other words, the ejection channels 111 may be arranged to receive cooling medium from said channel structure 10 at said periphery portion 3a of each arm 3. Each ejection channel 111 is arranged to eject cooling medium away from said rotor 100. In Figure 6, the ejection channel 111 is arranged to eject from a circumferential outer surface 110s of said end-plate 110.

Figure 6 further illustrates that each ejection channel 111 is arranged to eject said cooling medium towards an end-winding 201 of a stator 200 being arranged to accommodate said rotor 100. The end winding 201 may be wound about a stator core 302. Accordingly, each ejection channel 111 may as illustrated in Figure 6, be angled relative an axial axis a1 of said rotor so to be directed towards the end winding 201 of said stator 200. The end winding 201 of said stator 200 may refer to end-turns of the winding of the stator 200 and/or to portions of the winding of the stator 200 that extends beyond the depth of the stator 200 axially.

Figure 6 further illustrates, with numbers 1, 2, 3 how the cooling medium may flow. Specifically, Figure 6 illustrates that the cooling medium may be circulated from the rotor shaft 130 out from the ejection channels 111 via the channel structure 10.

## Claims

1. A support arrangement (1) for a rotor (100), the support arrangement (1) having an inner surface (2a) and an opposite outer surface (2b), the inner surface (2a) being arranged to be attached to a first base portion (102a) of an annular rotor core (101) of said rotor (100), the outer surface (2b) being arranged to face an end-plate (110) of said rotor, wherein the support arrangement (1) comprises:
- an annular disc portion (4) arranged to be coaxially arranged with respect to said rotor core (101);
- a plurality of radially distributed extending arms (3) extending from said annular disc portion (4), each arm (3) being arranged to extend along a pole base (103a) of a corresponding pole (103) of said rotor (100), each arm (3) being arranged to receive a winding overhang portion (121) of a winding arrangement (120) said rotor (100);
wherein the support arrangement (1) comprises a channel structure (10), the channel structure (10) extending from said annular disc portion (4) to an outer periphery portion (3a) of at least one of said arms (3);
wherein the channel structure (10) is arranged to receive cooling medium via a rotor shaft (130) or said rotor core (101) of said rotor (100) and to eject received cooling medium from said periphery portion (3a) of the arm (3).

2. The support arrangement according to claim 1, wherein the channel structure (10) is configured along the arm (3), to be a meandering path.

3. The support arrangement according to claim 1 or 2, wherein the channel structure (10) is defined by an indentation formed in said inner surface (2a) of said support arrangement (1), wherein surrounding parts (s1) of said indentation is arranged to hermetically abut said base portion (102a).

4. The support arrangement (1) according to any one of the preceding claims, wherein the channel structure (1) comprises an annular portion (5) at said inner surface (2a) of said support arrangement (1), wherein the channel structure (10) comprises a plurality of channel branches (10a) distributed to extend along each arm (3), each channel branch (10a) extending from said annular portion (5), the annular portion (5) being arranged to receive cooling medium via said rotor shaft (130) or said rotor core (101).

5. The support arrangement (1) according to claim 4, wherein the annular portion (5) forms a continuous annular passage.

6. The support arrangement (1) according to any one of the preceding claims, wherein the support arrangement (1) comprises a plurality of fins (12) within said channel structure (10).

7. A rotor (100) for an electric motor comprising:
- an annular rotor core (101) having a first and an opposite second base portion (102a, 102b), the rotor core (100) comprising a plurality of radially projecting poles (103) evenly distributed around an outer circumference of said rotor core (100), each pole (103) extending between said first and second base portion (102a, 102b);
- a rotor shaft (130) accommodated by said annular rotor core (101);
- a winding arrangement (120) wound around each pole (103);
- the support arrangement (1) of any one of the preceding claims, wherein the support arrangement (1) is attached to said first base portion (102a);
- an end-plate (110) enclosing said first base portion (102a), wherein the support arrangement (1) is intermediate the first base portion (102a) and said end-plate (110).

8. The rotor (100) according to claim 7, wherein the end-plate (110) forms an interference-fit relationship with said support arrangement (1), preferably the end-plate (110) and said support arrangement (1) jointly form a keyed connection.

9. The rotor (100) according to any one of the claims 7 and 8, wherein an inner surface (110a) of said end-plate (110) and said outer surface (2b) of said support arrangement (1) is arranged to jointly secure said winding overhang portions (121) of said winding arrangement (120) therebetween.

10. The rotor (100) according to any one of the preceding claims, wherein the end-plate (110) comprises a plurality of ejection channels (111), each ejection channel (111) being in fluid communication with the channel structure (10) at a corresponding periphery portion (3a) of each arm (3), wherein each ejection channel (111) is arranged to eject cooling medium away from said rotor (100), preferably from a circumferential surface of said end-plate (110).

11. The rotor (100) according to claim 10, wherein each ejection channel (111) is arranged to eject said cooling medium towards an end-winding of a stator (200) being arranged to accommodate said rotor (100).

12. The rotor (100) according to claim 11, where each ejection channel (111) is arranged to eject said cooling medium towards said end-winding by being angled relative an axial axis (a1) of said rotor (100), preferably by 25-65 degrees.

13. The rotor (100) according to any one of the claims 7-12, wherein the channel structure (1) comprises an annular portion (5) at an inner periphery of said annular disc portion (4) at said inner surface (2a) of said support arrangement (1), wherein the channel structure (10) comprises a plurality of channel branches (10a) distributed to extend along each arm (3), each channel branch (10a) extending from said annular portion (5), the annular portion (5) being arranged to receive cooling medium via said rotor shaft (130) or said rotor core (101).

14. The rotor (100) according to any one of the claims 7-13 wherein the rotor (100) comprises
- a pair of support arrangements (1, 1') according to the support arrangement of any one of the preceding claims, wherein an additional support arrangement (1') of said pair (1, 1') is attached to said second base portion (102b)
- an additional end-plate (110') enclosing said second base portion (102b), wherein the additional support arrangement (1') is intermediate the second base portion (102b) and said additional end-plate (110');
wherein the rotor shaft (130) or said rotor core (101) is arranged to distribute cooling medium to the support arrangement (1) and the additional support arrangement (1').

15. An electric motor (300) comprising:
- a stator (200)
- a rotor (100) according to any one of the claims 7-14, wherein the rotor (100) is accommodated by said stator (200).
